# EUROPEAN PATENT APPLICATION

(11) **EP 4 163 812 A1**
(43) Date of publication of application: **12.04.2023**
(21) Application number: 21306414.0
(22) Date of filing: 07.10.2021
(51) Int. Cl.: G06F 30/17, G06F 30/23, B29C 64/118, B29C 64/386, B29C 70/38, B33Y 50/02, G05B 19/19, G05B 19/4099, G06F 113/10

(54) **DESIGNING A MODELED OBJECT**

(71) Applicant: Dassault Systèmes, 78140 Vélizy-Villacoublay (FR); Ecole Polytechnique, 91128 Palaiseau Cedex (FR); CNRS, 75794 Paris Cedex 16 (FR)
(72) Inventor: GARNIER, David Henri, Vélizy-Villacoublay (FR); SCHMIDT, Martin-Pierre, Vélizy-Villacoublay (FR); ROHMER, Damien, 91140 Villebon sur Yvette (FR)
(74) Representative: Bandpay & Greuter

(57) **Abstract**

The disclosure notably relates to a computer-implemented method for designing a modeled object representing a mechanical part formed in a material having an anisotropic behavior with respect to a physical property. The method comprises providing a first mesh, a density field representing at least boundary of the modeled object, and an orientation tensor field representing a desired anisotropic behavior. The method further comprises, for each i^{th} principal direction of the orientation tensor field, computing an anisotropic reaction-diffusion pattern on an ith mesh, the i^{th} mesh having higher resolution than the first mesh and being bounded by the boundary of the modeled object. The method further comprises combining by Boolean operations the computed anisotropic reaction-diffusion patterns projected on a second mesh.

## Description

### TECHNICAL FIELD

The disclosure relates to the field of computer programs and systems, and more specifically to a method, system and program for designing a modeled object representing a mechanical part formed in a material having an anisotropic behavior with respect to a physical property.

### BACKGROUND

A number of systems and programs are offered on the market for the design, the engineering and the manufacturing of objects. CAD is an acronym for computer-aided design, e.g. it relates to software solutions for designing an object. CAE is an acronym for computer-aided engineering, e.g. it relates to software solutions for simulating the physical behaviour of a future product. CAM is an acronym for computer-aided manufacturing, e.g. it relates to software solutions for defining manufacturing processes and operations. In such computer-aided design systems, the graphical user interface can play a role as regards the efficiency of these techniques (CAD, CAE, CAM). These techniques may be embedded within product lifecycle management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA^{™}, ENOVIA^{™} and DELMIA^{™}) provide an engineering hub, which organizes product engineering knowledge, a manufacturing hub, which manages manufacturing engineering knowledge, and an enterprise hub which enables enterprise integrations and connections into both the engineering and manufacturing hubs. All together the system delivers an open object model linking products, processes, resources to enable dynamic, knowledge-based product creation and decision support that drives optimized product definition, manufacturing preparation and manufacturing (production).

In this context of industrial design, designing a modeled object representing a mechanical part formed in a material having an anisotropic behavior with respect to a physical property is gaining wide importance. The document Wu et al., "Topology optimization of multi-scale structures: a review", Structural and Multidisciplinary Optimization, 63, 2021, pp. 1455-1480, provides a review on Topology Optimization (TO) approaches for designing multi-scale structure. The document Choi et al., "Topology optimization using a reaction-diffusion equation", Computer Methods in Applied Mechanics and Engineering, 200(29-32), 2011, pp. 2407-2420 presents a structural topology optimization method based on a Reaction-Diffusion (RD) equation where the design sensitivity for the topology optimization is directly employed as the reaction term of the reaction-diffusion equation.

However, the known prior art does not allow creating designs made of highly efficient anisotropic oriented microstructures. In particular, the known prior art does not provide the control of local patterns (e.g., to satisfy certain geometrical constraints), or improve reliability of manufacturing. Further, the prior art does not provide high physical performance of specifically tailored anisotropic microstructures compared to classic isotropic material. In addition, the known prior art does not provide the fast generation of highly detailed designs.

Within this context, there is still a need for an improved method for designing a modeled object representing a mechanical part formed in a material having an anisotropic behavior with respect to a physical property.

### SUMMARY

It is therefore provided a computer-implemented method for designing a modeled object representing a mechanical part formed in a material having an anisotropic behavior with respect to a physical property. The method comprises providing a first mesh, a density field representing at least boundary of the modeled object, and an orientation tensor field representing a desired anisotropic behavior. The method further comprising for each i^{th} principal direction of the orientation tensor field, computing an anisotropic reaction-diffusion pattern on an i^{th} mesh, the i^{th} mesh having higher resolution than the first mesh and being bounded by the boundary of the modeled object. The method further comprises combining by Boolean operations the computed anisotropic reaction-diffusion patterns projected on a second mesh.

The method may comprise one or more of the following:
- the computing an anisotropic reaction-diffusion pattern on an i^{th} mesh comprises: computing an anisotropic diffusion tensor based on the orientation tensor field; and computing an anisotropic reaction-diffusion pattern on the i^{th} mesh based on a system of reaction-diffusion, the system of reaction-diffusion comprising a diffusion dependent on the computed anisotropic diffusion tensor;
- the computing an anisotropic reaction-diffusion pattern on the i^{th} mesh based on a system of reaction-diffusion comprises: computing a solution of the system of reaction-diffusion on the i^{th} mesh, the solution being a distribution of values on the i^{th} mesh which satisfies the system of reaction-diffusion; and computing the pattern by computing iso-surfaces of the computed solution for an iso-surface value;
- the method further comprising providing a solid material map representing, for each element of the i^{th} mesh, an alignment of orientation of the orientation tensor field at the element to orientation of the orientation tensor field at neighboring elements; and wherein computing an anisotropic reaction-diffusion pattern on the i^{th} mesh based on a system of reaction-diffusion comprises: computing an anisotropic reaction-diffusion pattern on the i^{th} mesh based on a system of reaction-diffusion, the system of reaction-diffusion comprising a diffusion dependent on the computed anisotropic diffusion tensor and a reaction dependent on the provided solid material map;
- the system of reaction-diffusion is a Gray-Scott model of the form, for principal direction i: $\begin{matrix}\frac{{ \partial {u}_{i}}{\partial t} & = & \left({σ}_{i}\left(x\right)∇\right) ⋅ ∇ {u}_{i} + γ \left(-{u}_{i}{{v}_{i}}^{2}+F\left(1-{u}_{i}\right)\right) \\ \frac{\partial {v}_{i}}{\partial t} & = & d {∇}^{2} {v}_{i} + γ \left({u}_{i}{{v}_{i}}^{2}-\left(k+F\right){v}_{i}\right) {I}_{{Ω}_{d}} \left(x\right) - λ \left(1-{I}_{{Ω}_{d}}\left(x\right)\right) {v}_{i}\end{matrix}$ ${I}_{{Ω}_{d}} \left(x\right)$ takes the value 1 if **x** ∈ **Ω**_{d} and 0 otherwise, λ, F and k are reaction parameters;
- the computing an anisotropic reaction-diffusion pattern on an i^{th} mesh further comprises upsampling of the orientation tensor field and the density field on the i^{th} mesh;
- the modeled object is a 3D modeled object, and wherein the combining by Boolean operations comprises computing a disjunction of a set of conjunctions of a first pattern on an i^{th} mesh and a second pattern on an j^{th} mesh, with i≠j;
- the modeled object is a 2D modeled object, and wherein the combining by Boolean operations comprises computing a disjunction of a first pattern on an i^{th} mesh and a second pattern and a second pattern on a j^{th} mesh with i≠j,
- the first mesh is a finite element mesh and wherein the providing the density field comprises: providing data associated to the first mesh, the data comprising one or more forces forming one or more respective load cases, one or more boundary conditions, one or more parameters related to the material, and a global quantity constraint relative to a global quantity of the material in the finite element mesh;
- the providing the density field further comprises: performing a topology optimization based on the first mesh and based on the data associated to the first mesh therefore obtaining the density field, the density field further representing distribution of material quantity of the 3D modeled object;
- the providing the orientation tensor field comprises, for each location of the orientation tensor field: computing a local stress tensor based on the density field and the data associated to the first mesh; and computing the orientation tensor field at the location based on the local stress tensor field; and/or
- the computing of the orientation tensor field comprises: computing a first orientation based on a principal eigenvector of the local stress tensor; computing one or more other orientations based on the principal eigenvector and the local stress tensor; and computing the orientation tensor field based on the first orientation and the one or more other orientations.

It is further provided a computer program comprising instructions for performing the method.

It is further provided a computer readable storage medium having recorded thereon the computer program.

It is further provided a system comprising a processor coupled to a memory, the memory having recorded thereon the computer program.

### BRIEF DESCRIPTION OF THE DRAWINGS

Non-limiting examples will now be described in reference to the accompanying drawings, where:
- FIG. 1 shows a flowchart of an example of the method;
- FIG. 2 shows a flowchart of another example of the method;
- FIGs. 3A to 3D show a schematic of a cantilever 2D problem on a coarse scale grid comprising forces and boundary conditions, density field obtained by a topology optimization, principal stress orientations, and solid material map;
- FIG. 4 shows a map of parameters of the reaction-diffusion equation for oriented and sufficiently connected patterns;
- FIGs. 5A and 5B show stress oriented structures for the cantilever 2D problem;
- FIGs. 6A and 6B show a 2D and a 3D force inverter designed by application of an example of the method;
- FIGs. 7(a) to 7(i) show a time evolution of design of a force inverter according to an embodiment of the method;
- FIG. 8 shows an example of a graphical user interface of the system; and
- FIG. 9 shows an example of the system.

### DETAILED DESCRIPTION

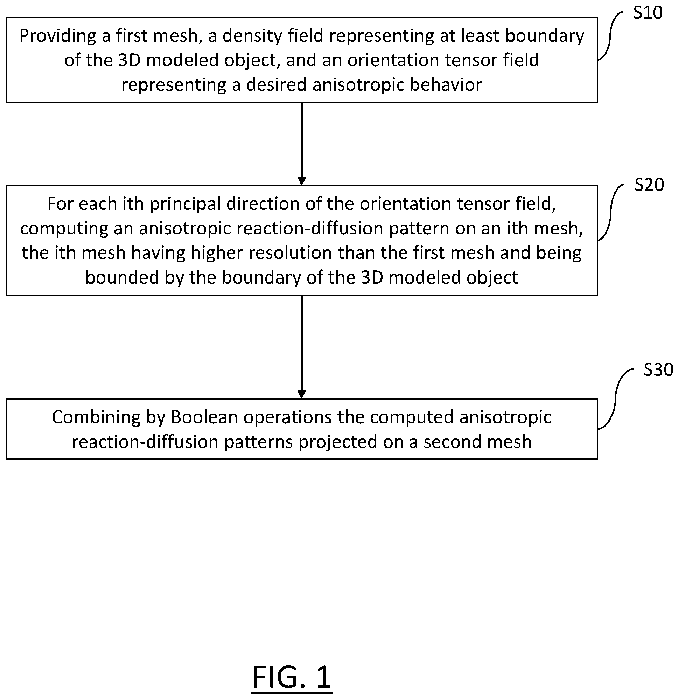

With reference to the flowchart of FIG. 1, it is proposed a computer-implemented method for designing a modeled object representing a mechanical part formed in a material having an anisotropic behavior with respect to a physical property. The modeled object representing a mechanical part may be a modeled object representing a mechanical part; a mechanical part is an operational part on a device of the real world. The method comprises providing (S10) a first mesh, a density field representing at least boundary of the modeled object, and an orientation tensor field representing a desired anisotropic behavior. The method further comprises, for each i^{th} principal direction of the orientation tensor field, computing (S20) an anisotropic reaction-diffusion pattern on an i^{th} mesh. The i^{th} mesh has higher resolution than the first mesh and being bounded by the boundary of the modeled object. The method further comprises combining (S30) by Boolean operations the computed anisotropic reaction-diffusion patterns projected on a second mesh.

This constitutes an improved method for designing a modeled object representing a mechanical part formed in a material having an anisotropic behaviour with respect to a physical property. Notably, the method improves the efficiency of the design by using a multi-scale workflow. In such a multi-scale workflow, a density field can provide an initial design by providing at least a boundary of the designed object on a first mesh. Such a first mesh may be a coarse mesh thus the providing of the initial design is computationally efficient. Then the method performs the designing by computing anisotropic reaction-diffusion pattern(s) on an i^{th} mesh having higher resolution than the first mesh and being bounded by the boundary of the modeled object represented by the provided density field. Thus, the method computes the pattern(s) merely on an area bounded by the initial design and using a higher resolution mesh, thereby refines the initial design. Such a refinement is computational efficient as the high-resolution calculations are started from a better initial condition (i.e., initial guess) provided by the density field and on the area of the initial design (i.e., smaller design space). In other words, the method enables refining, i.e., obtaining local micro-structures for, a given design for the modeled object (by provided density field) by computing the pattern(s) on higher resolution meshes and to obtain a new design for the modeled object based on an initial design.

In addition, such a multi-scale workflow enables the method to employ any known method in the literature for providing the density field. In examples, the provided density field may be a result of a topology optimization or a designed object by a user (e.g., a designer), then the method may design a modeled object by computing an anisotropic reaction-diffusion pattern for each principal direction and combine the patterns.

In addition, such a multi-scale workflow enables the method to auto-complete and/or fast edit an initially provided design (represented by the provided density field). In examples, a user (e.g., a designer) may interactively erases some regions or draw guiding shapes acting as constraints, then the method may re-design the modeled object by computing an anisotropic reaction-diffusion pattern for each principal direction in the erased region and combine the patterns in order to update the modeled object. This improves the ergonomics of the design method

Further, the method computes a reaction-diffusion pattern for each principal direction of the orientation tensor field before combining them to obtain the designed modeled object. This improves the solution as the method is able to tailor design the modeled object for each direction thus obtains an anisotropic structure. Such a specifically tailored anisotropic microstructure has highly physical performance compared to classic isotropic material.

The method designs the modeled object by combining anisotropic reaction-diffusion patterns. The reaction-diffusion patterns are local patterns thus the method is able to control of local patterns of the modeled object for example to satisfy certain geometrical constraints or adapt the model to improve reliability of manufacturing. This further facilitates designing structures with improved regularity in some target areas of the designed object for example near singularities in the orientation field. Such a regularity improves the fabrication of the designed object for example by additive manufacturing. This is particularly relevant in the field of manufacturing CAD, as explained hereinafter.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

The method generally manipulates modeled objects. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be 2D or 3D. A 3D modeled object may for example represent a product such as a part or an assembly of parts, or possibly an assembly of products. A 2D modeled object may be a simplified representation of a product such as a part or an assembly of parts, or possibly an assembly of products. For example, the 2D modeled object may represent a profile of a 3D product extruded along a curve (e.g., an extrusion axis). Such a 2D representation may efficiently represent the physical properties or physical behaviour of the product. By "modeled object", it is meant any object which is modeled by data allowing its 2D or 3D representation. A 2D or 3D representation allows the viewing of the part from all angles. For example, a 2D or 3D modeled object, when 2D or 3D represented, may be handled and turned around any of its axes, or around any axis in the screen on which the representation is displayed. The display of a 2D or 3D representation facilitates design (i.e. increases the speed at which designers statistically accomplish their task). This speeds up the manufacturing process in the industry, as the design of the products is part of the manufacturing process.

The modeled object may represent the geometry of a product to be manufactured in the real world subsequent to the completion of its virtual design with for instance a CAD software solution or CAD system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The modeled object may form a discrete geometrical representation of a 3D real-world object, e.g., representing an object from the real world such as a mechanical part. The discrete geometrical representation may be 2D or 3D. The discrete geometrical representation is a data structure which comprises a discrete set of pieces of data. Each piece of data may be equivalently referred to as a discrete element. Each piece of data represents a respective geometrical entity positioned in a 3D space (when the discrete geometrical representation is 3D) or in a 2D space (when the discrete geometrical representation is 2D). Each geometrical entity represents a respective location of the 3D object (in other words, a respective portion of material constitutive of a solid represented by the 3D object) or a 2D representation thereof. The aggregation (i.e., union or juxtaposition) of the geometrical entities represents altogether the 3D object or a 2D representation thereof. The discrete geometrical representation may in examples comprise a number of such pieces of data higher than 100, 1000, or 10000.

The discrete geometrical representation may for example be a point cloud, each geometrical entity being a point. The discrete geometrical representation may alternatively be a mesh, each geometrical entity being a mesh element (e.g., a tile or face, or a volume). The mesh may be regular or irregular (i.e., consisting or not of faces of a same type). The mesh may be a polygonal mesh, for example a triangular mesh or a polyhedral mesh, for example a tetrahedral mesh. The mesh may be obtained from a point cloud, for example by triangulating the point cloud (e.g., with a Delaunay triangulation).

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAM solution, it is additionally meant any solution, software of hardware, adapted for managing the manufacturing data of a product. The manufacturing data generally includes data related to the product to manufacture, the manufacturing process and the required resources. A CAM solution is used to plan and optimize the whole manufacturing process of a product. For instance, it can provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. Such CAM solutions are provided by Dassault Systèmes under the trademark DELMIA^{®}.

By CAE solution, it is additionally meant any solution, software of hardware, adapted for the analysis of the physical behavior of a modeled object. A well-known and widely used CAE technique is the Finite Element Method (FEM) which typically involves a division of a modeled object into elements which physical behaviors can be computed and simulated through equations. Such CAE solutions are provided by Dassault Systèmes under the trademark SIMULIA^{®}. Another growing CAE technique involves the modeling and analysis of complex systems composed a plurality components from different fields of physics without CAD geometry data. CAE solutions allow the simulation and thus the optimization, the improvement and the validation of products to manufacture. Such CAE solutions are provided by Dassault Systèmes under the trademark DYMOLA^{®}.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

"Designing a modeled object" designates any action or series of actions which is at least part of a process of elaborating a modeled object. Thus, the method may comprise creating the modeled object from scratch. Alternatively, the method may comprise providing a modeled object previously created, and then modifying the modeled object. The designing of a modeled object is particularly relevant in the field of manufacturing CAD, that is, for software solutions to assist design processes and manufacturing processes, whereby the objective is to produce a physical product corresponding to a designed modeled object. Within this context, the modeled object represents a manufacturing product, that may be manufactured downstream to its design. The method may thus be part of such a design and/or manufacturing process. The method may for example form or be part within such design and/or manufacturing process. The method may in other words be included in a manufacturing CAD process, at a step where the CAD model is adapted/obtained/edited for use in subsequent steps of the manufacturing CAD process (e.g., further design/edit actions, tests, simulations and/or manufacturing). The method may be included in many other applications which use the detected CAD features by the method.

As discussed above, the method may be included in a manufacturing process, which may comprise, after performing the method, producing a physical product corresponding to the modeled object. In any case, the modeled object designed by the method may represent a manufacturing object. The modeled object may thus be a modeled solid (i.e. a modeled object that represents a solid). The manufacturing object may be a product, such as a part, or an assembly of parts. Because the method improves the design of the modeled object, the method also improves the manufacturing of a product and thus increases productivity of the manufacturing process.

The modeled object represents a mechanical part formed in a material. The material has an anisotropic behavior with respect to a physical property, i.e., the physical property varies according to the direction/orientation within the material.

The method comprises providing some inputs at step S10. The inputs are now discussed, being understood that further inputs might be also provided.

The inputs comprise a first mesh. A first mesh is thus provided (or obtained). The first mesh may be a finite element mesh (FE mesh) as known in the art. The first mesh represents a space containing the modeled object. The FE mesh may be regular or irregular. A regular FE mesh allows easier computations for example during a topology optimization. The FE mesh may be of any type, for example with each finite element being a triangle or a rectangle (when the mesh is 2D), or a tetrahedron or a hexahedron (when the mesh is 3D). Providing the FE mesh may comprise defining a space which is arranged to contain the modeled object and a meshing of the space. The method may comprise displaying the FE mesh to the user, and, by the user, defining other inputs of the topology optimization, e.g., including by graphical user-interaction on the displayed FE mesh. By "graphical user-interaction" with respect to defining an element, it is hereby meant any user-interaction where the designer employs a haptic system (e.g., a mouse or a touch device such as a sensitive/touch screen or a sensitive/touch pad) to activate one or more locations of the display unit and where the element is to be positioned. Activating a location of a scene may comprise positioning thereon the cursor of a mouse or performing a touch thereon. Substantially real-time after the activation, a representation of the defined element may be displayed.

The inputs further comprise a density field. The density field represents at least a boundary of the modeled object. A boundary of the modeled object represents the limits of modeled object and defines interior and exterior points; interior points are those that belong the objects and exterior pints are those that do not belong to the object. In examples, the modeled object is a 3D modeled object that is a solid, and the boundary of the modeled object defines points that belong to the solid (e.g. the matter of the object) and points outside the solid. In examples, the modeled object is a 2D modeled object limiting a 2D surface, and interior points belonging to the 2D surface represent the 2D modeled object.

In examples, the density field may further represent distribution of material quantity of the modeled object, i.e. a value of volume fraction of material over the mesh (e.g., per finite element of the mesh when the mesh is an FE mesh). A material distribution may be a distribution (i.e. layout) of quantity (e.g., volume fraction) of material over the mesh, i.e., a density field. As mentioned above, the density field may be a result of a topology optimization. As known *per* se, a topology optimization may explore the candidate material distributions by varying/modifying the material quantity (e.g. volume fraction) in each element of the mesh, as the design or free variables, to optimize an objective function. In examples, the free variable of the objective function may be directly the distribution (i.e., layout) of quantity (e.g., volume fraction) of material over the mesh. The objection function may depend on the material parameters (i.e., fixed variables of the objective function may involve the material parameters) and the optimization may be performed under constraint (i.e., constrained optimization), including the global quantity constraint. Each element of the mesh may have a given relative density value defining whether it is empty or full of material, respectively defined by the values "0" and "1". Additionally, in order to make the optimization problem continuous, the general topology optimization may allow the elements to take any value between 0 and 1. This may be referred to as "relaxation". Since the interpretation of elements with intermediate densities can be ambiguous, the general topology optimization workflow may introduce the penalization approach which forces intermediate elemental densities to be globally less efficient for the structural behavior than elements with the lower and upper bound of 0 or 1, respectively. The optimization may be performed according to any algorithm known in the field, for example an iterative algorithm.

The inputs further comprise an orientation tensor field. The orientation tensor field represents a desired anisotropic behavior. By "a desired anisotropic behavior" it is meant an anisotropy of the designed object which corresponds to the conditions for which the object being designed.

Then, at step S20, the method computes, for each i^{th} principal direction of the orientation tensor field, an anisotropic reaction-diffusion pattern on an i^{th} mesh. By "principal direction" it is meant per se the direction of the eigenvalues of the orientation tensor field, i.e., the directions corresponding to principal curvatures of the orientation tensor field.

Each i^{th} mesh has higher resolution than the first mesh, i.e., has larger number of mesh elements. In examples, the first mesh is a FE mesh comprising discrete geometric and topological cells, and each i^{th} mesh has a number of similar cells that is larger than the number of cells of the first mesh.

Each i^{th} mesh is bounded by the boundary of the modeled object. In other words, each i^{th} mesh is encompassed in the first mesh; the boundaries of the first and each i^{th} mesh may coincide. Thus, each i^{th} mesh has an area/volume defined inside in or in coincidence with an area/volume bounded by the boundary of the modeled object which is represented by the density field on the first mesh. Any of the i^{th} meshes may be a FE mesh as discussed above. Each i^{th} mesh corresponding to the i^{th} principal direction may be same as the j^{th} mesh corresponding to the j^{th} principal direction. In examples, all i^{th} meshes may be a same mesh. By an "anisotropic reaction-diffusion pattern" it is meant a pattern which corresponds to a solution of an anisotropic system of reaction-diffusion equations.

Then, at step S30, the method combines by Boolean operations the computed anisotropic reaction-diffusion patterns projected on a second mesh. The Boolean operations may comprise one or more conjunction and/or disjunction of the one or more anisotropic reaction-diffusion patterns. By "projected on a second mesh" it is meant that each of the anisotropic reaction-diffusion patterns is projected on a second mesh. The Boolean operations may be then applied on the projected patterns. The second mesh may be any of the i^{th} meshes. In examples, the second mesh may be a FE mesh as discussed above.

In examples, the computing of an anisotropic reaction-diffusion pattern on an i^{th} mesh may comprise computing an anisotropic diffusion tensor based on the orientation tensor field. The computing of an anisotropic reaction-diffusion pattern on an i^{th} mesh may further comprise computing an anisotropic reaction-diffusion pattern on the i^{th} mesh based on a system of reaction-diffusion. The system of reaction-diffusion may comprise a diffusion dependent on the computed anisotropic diffusion tensor.

In examples, the computing of an anisotropic reaction-diffusion pattern on the i^{th} mesh based on a system of reaction-diffusion comprises computing a solution of the system of reaction-diffusion on the i^{th} mesh. The solution may be a distribution of values on the i^{th} mesh which satisfies the system of reaction-diffusion. By "computing a solution of the system of reaction-diffusion on the i^{th} mesh" it is meant obtaining a value from the distribution of values for each element of the i^{th} mesh. The system of reaction-diffusion equation may be a time-dependent (i.e., transient) system of equation. In examples, the solution of a time-dependent system of reaction-diffusion may be a steady-state solution of the system of equation. The steady-state solution of the time-dependent system of equation may be a solution which satisfies one or more convergence criteria. In examples, the one or more convergence criteria are satisfied when a difference (e.g., a difference in a total mass computed from the density field) between two consecutive solutions (i.e., solutions corresponding to two consecutive time instants) is smaller than a threshold. In examples, the threshold may be smaller or equal to 0.1, 0.05, or 0.01. Alternatively or additionally, the one or more convergence criteria are satisfied when a specific number of solutions (e.g., each belongs to a time instant) are computed or after a solution at a particulartime instant is computed. Further alternatively or additionally, the one or more convergence criteria are satisfied upon an input of a user, for example when the user is satisfied by results when the results are shown on a screen to the user.

The system of reaction-diffusion may comprise an initial condition and one or more boundary conditions. Thus the computing of a solution of the system of reaction-diffusion is further based on the initial and the boundary conditions.

In examples, the computing of an anisotropic reaction-diffusion pattern based on a system of reaction-diffusion may further comprise computing the pattern by computing iso-surfaces of the computed solution for an iso-surface value. An iso-surface is a 2D or 3D surface (which may equivalently be called iso-line or iso-curve in 2D) that represents points of a constant value; in other words, it is a level set of a continuous function. The pattern may thus correspond to points with values significantly equal to the iso-surface value of a respective iso-surface. By "significantly equal" it is meant that the value(s) of the pattern may be in a range comprising the respective iso-surface value, for example [s-α, s+β] in which s is the respective iso-surface value and α and β are two positive numbers. In examples, α and β may be smaller or equal than 10 percent or 5 percent of a magnitude of the iso-surface value (e.g., absolute value of the iso-surface value). The method may compute iso-surfaces according to any known method in the field of computer graphics or computational geometry (e.g., marching cubes algorithm or dual contouring algorithm). The iso-surface value may be a predefined value or a value set by the method. In examples, all the iso-surface values (each corresponds to a principal direction) may equal to a same value. Alternatively, the iso-surface value may be equal to a different value for each principal direction. This enables the method to compute iso-surfaces depending on whether or not the i^{th} principal direction is oriented along the first principal direction. In examples, the method may enlarge the pattern oriented along the first principal direction and/or reduce the pattern(s) not oriented along the first principal direction by performing a shifting of iso-surfaces before performing the Boolean operations. By "shifting" it is meant shifting, i.e., modifying (e.g., according to a threshold), the value for the respective iso-surface. In examples, the shifting may be a part of a filtering step comprising thresholding iso-surfaces between two values which is applied to shift the iso-values relative to each direction. This constitutes an improved solution by enhancing the structural performance of the designed modeled object, by enlarging the pattern oriented along the first principal stress directions compared to the pattern(s) oriented along other direction(s). In particular, this allows to thicken or thin the pattern along each direction.

In examples, the method may further comprise providing a solid material map. The method may compute a solid material map for each i^{th} mesh or only one solid material map in examples where all i^{th} meshes are a same mesh. The solid material map (on an i^{th} mesh) may represent, for each element of the i^{th} mesh, an alignment of orientation of the orientation tensor field at the element to orientation of the orientation tensor field at neighbouring elements. The method may assess an alignment with respect to the first principal direction. This enables the method to detect regions of the orientation tensor field with singularities. Further, the system of reaction-diffusion may comprise a diffusion dependent on the computed anisotropic diffusion tensor and a reaction dependent on the provided solid material map. This enables the method to infill the anisotropic reaction-diffusion patterns at areas corresponding to the singularities in the orientation tensor field.

In examples, the system of reaction-diffusion is a Gray-Scott model of the form, for principal direction i: $\begin{matrix}\frac{{ \partial {u}_{i}}{\partial t} & = & \left({σ}_{i}\left(x\right)∇\right) ⋅ ∇ {u}_{i} + γ \left(-{u}_{i}{{v}_{i}}^{2}+F\left(1-{u}_{i}\right)\right) \\ \frac{\partial {v}_{i}}{\partial t} & = & d {∇}^{2} {v}_{i} + γ \left({u}_{i}{{v}_{i}}^{2}-\left(k+F\right){v}_{i}\right) {I}_{{Ω}_{d}} \left(x\right) - λ \left(1-{I}_{{Ω}_{d}}\left(x\right)\right) {v}_{i}\end{matrix}$ where ***σ**ᵢ* is the computed anisotropic diffusion tensor, d is an isotropic diffusion parameter, V is a gradient operator, ∇² is a Laplace operator, and **Ω***_{d}* represents a region bounded by the boundary of the modeled object. (**σ***ᵢ*(***x***)∇) . ∇ *uᵢ* denotes the dot product between (**σ***ᵢ*(***x***)∇) and ∇ *uᵢ*. Further, ${I}_{{Ω}_{d}} \left(x\right)$ takes the value 1 if ***x*** ∈ **Ω***_{d}* and 0 otherwise, and *λ*, *F* and *k* are reaction parameters. The Gray-Scott model may comprise a diffusion dependent on the computed anisotropic diffusion tensor **σ***ᵢ*, i.e., the diffusion for the first equation (which governs temporal changes of *uᵢ*) is equal to the computed anisotropic diffusion tensor. The Gray-Scott model with the anisotropic diffusion tensor enables the method to compute regular and local patterns along each principal direction of the tensor field. The ${I}_{{Ω}_{d}}$ enables the method to bound (i.e., limit) the patterns inside an area bounded by the boundary of the modeled object. The method may set a value for parameters *F* and *k* such that the respective patterns are oriented and sufficiently connected, for example, *F* = 0.0395 and *k* = 0.059. The method may set a value for the parameter *λ* > 0 such that *λ* » F, for example five, ten, twenty, or thirty times larger than the value of F. In particular examples, F = 0.0395 and *λ* is equal to 1. The Gray-Scott model may comprise initial and boundary conditions. In examples, *u*(***x***,*t* = 0) = 1 everywhere (i.e., for each ∈ **Ω***_{d}*) and *ν*(**x***,t* = 0) = 0 except (*x* ∈ ***ω**, t* = 0) = 1 with ***ω*** a region of **Ω*_{d}*.** The boundary conditions of the Gray-Scott model may be cyclic, symmetric, and/or reflective or any combination thereof. The solution of the Gray-Scott model is not affected significantly by the type of boundary conditions as the concentrations of species (i.e., *uᵢ* and *νᵢ*) are killed outside **Ω*_{d}*.** The computing of the pattern may compute iso-surfaces of the computed solution *uᵢ* of the Gray-Scott model.

In example, the computing of an anisotropic reaction-diffusion pattern on an i^{th} mesh may further comprise upsampling of the orientation tensor field and the density field on the i^{th} mesh. In examples, the providing the density field and/or the orientation tensor field may comprise such an upsampling. By "upsampling of the orientation tensor field and the density field on the i^{th} mesh" it is meant to find respective values of the orientation tensor field and the density field on a finer mesh (i.e., i^{th} mesh) from the values of provided on a coarser mesh (i.e., the first mesh). As known per se, upsampling is a process to increase the sampling rate (e.g., mesh resolution). The method may compute the anisotropic reaction-diffusion pattern on a mesh having a higher resolution and the upsampling enables the method to obtain respective values on the mesh with higher resolution. In examples, the upsampling may obtain the values for **σ***ᵢ* and the density field (which represents at least boundary of **Ω*_{d}***) in the Gray-Scott model discussed above. In examples where the system of reaction-diffusion comprises a reaction dependent on the provided solid material map as discussed above, the method may further comprise upsampling of the solid material map. The method may perform upsampling according to any known method. In examples, the upsampling of the density field and the solid material map may comprise increasing (e.g., doubling) the resolution of the grid, smoothing the results by some steps (e.g., four or five steps) of Gaussian filter, and repeating the process until reaching the desired resolution (i.e., the resolution of the i^{th} mesh). The upsampling may be followed by renormalization step. The presence of a renormalization step may depend on the quality of an input field (e.g., the field resulted from the upsampling). In examples, the method may perform the upsampling of the orientation tensor field same as the upsampling of the density field and the solid material map without the smoothing step.

In examples where the modeled object is a 3D modeled object, the combining by Boolean operations may comprise computing a disjunction of a set of conjunctions of a first pattern (***S**ᵢ*) on an i^{th} mesh and a second pattern (***S**ⱼ*) on a j^{th} mesh, with i≠j. The Boolean operation of conjunction may correspond to an intersection of patterns while the Boolean operation of disjunction may correspond to a union of patterns. In examples where the system of reaction-diffusion is the Gray-Scott model discussed above, the combining may be of the form ${S}_{3 D} = {∪}_{i \neq j} {S}_{i} ∩ {S}_{j} = {max}_{i \neq j} \left({min}_{i \neq j}\left({{u}^{˜}}_{i}, {{u}^{˜}}_{j}\right)\right)$ where *ũᵢ* and *ũⱼ* are the computed solution *uᵢ* and *uⱼ,* respectively after optionally being shifted as discussed above.

In examples where the modeled object is a 2D modeled object, the combining by Boolean operations may comprise computing a disjunction of a first pattern (***Sᵢ***) on an i^{th} mesh and a second pattern and a second pattern (***Sⱼ***) on a j^{th} mesh with i≠j. In examples where the system of reaction-diffusion is the Gray-Scott model discussed above, the combining may be of the form ${S}_{2 D} = {S}_{1} ∪ {S}_{2} = max \left({{u}^{˜}}_{1}, {{u}^{˜}}_{2}\right)$ where *ũ*₁ and *ũ*₂ are the computed solution *u*₁ and *u*₂, respectively after optionally being shifted as discussed above.

In examples, the first mesh may be a finite element mesh and the providing the density field may comprise providing data associated to the first mesh. The associated data may include data representing conditions of use of the mechanical part. The data associated to the first mesh may comprise one or more forces forming one or more respective load cases. In other words, the associated (digital) data include (digital) vectors (e.g., with magnitudes in Newtons or in a multiple thereof) each applicable and linked to one or more finite elements of the FE mesh. These (digital/virtual) forces represent real-world loads to which the mechanical part will be subject when used. In other words, for each one or more finite elements of the FE mesh for which a respective force is present in the data, the data represent the fact that material of the mechanical part at locations corresponding to said one or more finite elements will be subject to corresponding loads in the real-world. But since a mechanical part may theoretically be subject to an infinite number of loads, not all loads are represented by the digital forces present in the data. The digital forces only represent a restriction of the whole set of loads, for example most significant ones and/or most representative ones. The digital forces may be determined for each modeling problem and may be chosen to be the largest (i.e., highest magnitude) real-world forces the object may be subject to during its lifetime, since these real-world forces tend to cause the largest deformations and mechanical stresses. As known per se from the field of manufacturing CAD, a set of one or more real-world forces exerted at the same time may be grouped in a so-called load-case. When there exist two or more load cases, they are not necessarily applied at the same time on the mechanical part and cannot accumulate/compensate each other. An industrial problem may in examples have between one and a dozen load-cases. In examples, the user may select via graphical user-interaction finite elements of the FE mesh, and then specify a force applicable thereto. In other words, a load case may comprise a set of real-world loads/forces that act on a physical object at one time. A model can experience different load cases at different times (for example, consider a building that is subjected to gusts of wind). Thus, a digital force in the associated data may represent several real-world forces applied to the physical object at a same time, i.e., a load case.

The data associated to the first mesh may further include one or more boundary conditions. A boundary condition is a constraint on the boundary of the modeled object. Each boundary condition applies and is linked to one or more finite elements of the mesh and represents a respective constraint on the boundary to which the mechanical part is subject in use. The boundary conditions may be equivalently referred to as kinematic constraints. In other words, each boundary condition represents the fact that material of the mechanical part at locations corresponding to said one or more finite elements is subject to a constraint on its displacement, for example using Dirichlet boundary conditions. An element may have its displacement constrained (among others) along a plane, along a curve, along/around an axis, or to/around a point, and/or its displacement may be only constrained only in translation, only in rotation, or in both translation and rotation. In the case of a displacement constrained to a point both in translation and rotation, the element is fixed in 3D or 2D space and is said to be "clamped". An element may however have its displacement constrained in translation along a plane but move freely on said plane (e.g., if it belongs to an object mounted on a bearing), in translation along an axis but move freely on said axis (e.g., in a piston), or in rotation around an axis (e.g., joints of a robotic arm). In examples, the boundary conditions represent all the constrained boundaries. In other words, for each finite element of the FE mesh which is intended to eventually contain material that is constrained (e.g., to remain fixed), a boundary (e.g., clamping) condition may be associated to integrate this fact in the topology optimization. In examples, the user may select via graphical user-interaction finite elements of the FE mesh, and then specify that boundary conditions are applicable thereto. In examples, the one or more constrained boundaries of the mechanical part comprise or consist of one or more fixed boundaries (i.e. the material at said one or more boundaries cannot move), and the corresponding one or more boundary conditions are clamping conditions.

The data associated to the first mesh may further include one or more parameters related to the material. These material parameters may in particular represent physical characteristics of the material, e.g. characteristics of the material with respect to the physical property. The material parameters may for example relate to a constitutive law of the material with respect to the physical property. For example, the material parameter may include any physical quantity pertaining to the constitutive law. In examples, the user may specify a material (e.g. laminates and/or composites, such as woods, glass fibers, carbon fibers, ceramic matrix material or alumina matrix material), for example by selection from a list, and/or the system may determine automatically the material parameters and/or propose selection thereof to the user, for example based on one or more formulas and/or on a database. The material can be any material, for example a solid and/or isotropic material, such as a metal (e.g., steel, silver, gold, titanium), a plastic (nylon, ABS, polycarbonates, resins), a ceramic or a composite for example. The physical property may be stiffness and the constitutive law may represent the stiffness as a constitutive relation between the stress and the strain, as known *per se* from the field of mechanics. The stiffness may depend on the Young's moduli, on Poisson's ratio and on shear moduli, as known *per* se from the field of mechanics.

The data may further comprise a global quantity constraint relative to a global quantity of the material in the finite element mesh. The global quantity constraint is relative to a global quantity of the material in the FE mesh. In other words, the global quantity constraint restricts values of the total quantity of the material in the whole FE mesh. The global quantity constraint may for example be provided as a bound of the fraction of the (whole) FE mesh which can be filled with the material, for example an upper bound for said fraction. Alternatively, the global quantity constraint may, rather than a bound, provide a value which has to be reached. In examples where a topology optimization is performed, said topology optimization may however optimize an objective function which tends to use as much material as available in the optimized result, rendering such an equality constraint equivalent to an upper bound constraint. In all cases, the fraction may be a volume fraction (also referred to as GVC in such a case, as in "Global Volume Constraint"). In other examples, the global quantity constraint may involve values representing weight of the material.

In examples, the providing of the density field may further comprise performing a topology optimization based on the first mesh and based on the data associated to the first mesh, therefore obtaining the density field. In other words, the performing of the topology optimization results in obtaining a density field. The method may perform a topology optimization according to any known method. As discussed above the density field represent at least boundary of the modeled object.

In examples, the providing of the orientation tensor field may comprise, for each location of the orientation tensor field computing a local stress tensor based on the density field and the data associated to the first mesh. The providing of the orientation tensor field may further comprise computing the orientation tensor field at the location based on the local stress tensor field. The method may compute the local stress tensor using any known method, for example a finite element analysis. The computed local stress tensor may be a symmetric real tensor, thus diagonalizable for example in an orthonormal basis. This allows extracting (two in 2D and three in 3D) perpendicular principal directions which then be used as anisotropic directions for computing an anisotropic reaction-diffusion pattern on each of the directions.

In examples, the computing of the orientation tensor field may comprise computing a first orientation based on a principal eigenvector of the local stress tensor. As known per se the principal eigenvector is an eigenvector corresponding to the eigenvalue of largest magnitude (i.e., biggest absolute eigenvalues). The computing of the orientation tensor field may further comprise computing one or more other orientations based on the principal eigenvector and the local stress tensor. In examples where the modeled object is a 2D modeled object, the method may compute one more other direction being perpendicular to the principal eigenvector. In examples where the modeled object is a 3D modeled object, the method may compute two other orientations as a second and a third eigenvectors of the local stress tensor (optionally sorted by magnitudes of respective eigenvalues). The method may compute the orientations such that each of the other orientations describes two vector fields with maximal alignment between vectors inside each field. Alternatively, or in examples where the second and/or the third eigenvectors correspond to low level of stress, i.e., when the corresponding eigenvalue for each of the second and the third eigenvector is of small magnitude (e.g., smaller than a ten percent or five percent of the eigenvalue of largest magnitude) the method may generate the second and the third orientation, each by a cross product between the first orientation and a constant vector (e.g., standard basis). This improves the coherence of the computed orientation tensor field. For the three dimensional case, the last two vector fields may be sorted according their alignment with their actual mean global orientation. In other words if *ν*1(*x*)*, ν*2(*x*) are the two last eigenvectors of an element located in x, and *̅ν̅*̅1̅, *̅ν̅*̅2̅ the global mean eigenvectors, *ν*1(*x*) and *ν2*(*x*) may be switched if it is found that (*v2*(*x*)*, ν̅*1(*x*)) are more aligned with (*̅ν̅*̅1̅, *̅ν̅*̅2̅)̅, i.e. if | *ν*2(*x*) · *̅ν̅*̅1̅| + | *ν*1(*x*) · *̅ν̅*̅2̅ | > | *ν*1(*x*) · *̅ν̅*̅1̅| + | *v2(x)* · *̅ν̅*̅2̅ |. Yet alternatively, the providing of the orientation tensor field may comprise optimizing an orientation field distributed on the first mesh with respect to an objective function. The objective function may reward orientation continuity with respect to a physical property. Such an optimizing may be based on the first mesh and on the data associated to the first mesh. Such an optimization of the orientation field may be performed according to the method for designing a 3D modeled object disclosed in EP19306655.2 filed on 16 December 2019, which is incorporated herein by reference.

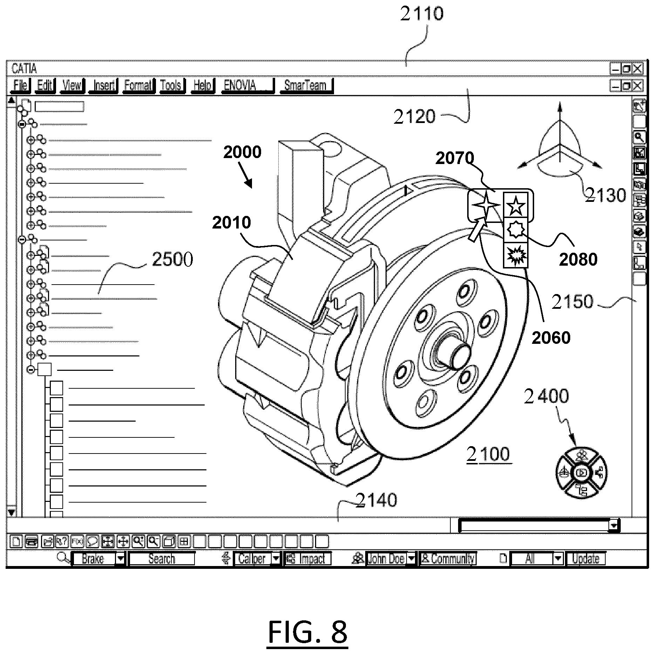

FIG. 8 shows an example of the GUI of the system, wherein the system is a CAD system. In particular, the output of the method of topology optimization may be imported into the GUI 2100 so that the user is able to perform the design editions thereon. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

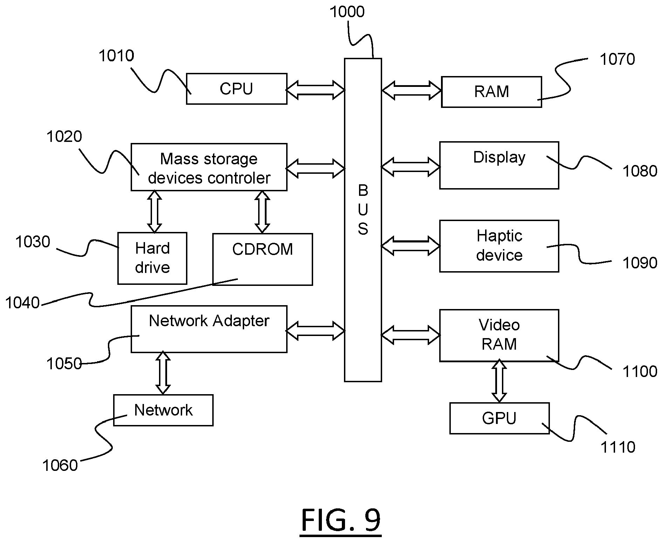

FIG. 9 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

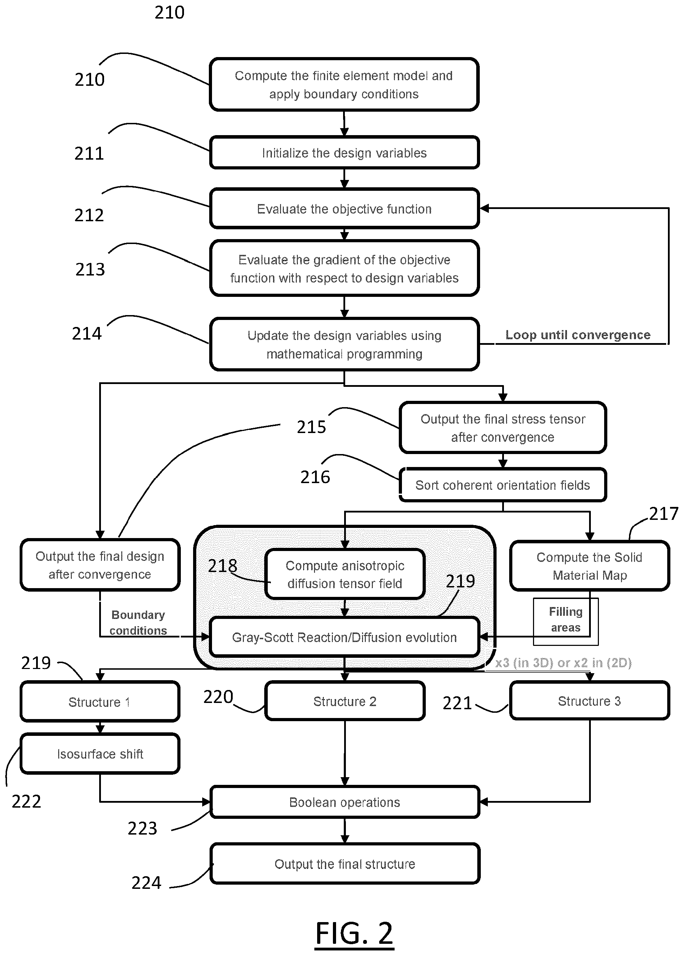

Implementations of the method are now discussed in reference to the example flowchart of FIG. 2.

The implementations allow creating designs made of highly efficient anisotropic oriented microstructures by combining topology optimization and reaction diffusion in a multiscale workflow. The implementations use reaction-diffusion methods to generate oriented microstructures. In particular, the implementations create multiscale structure via pursuing:
- control of local patterns, for example to satisfy certain geometrical constraints or improve reliability of manufacturing,
- high physical performance of specifically tailored anisotropic microstructures compared to classic isotropic material, and
- fast generation of highly detailed designs by only solving the global problem on a coarse scale and then generating a detailed microstructure on a fine scale.

The implementations provides control of local patterns, high physical performance of specifically tailored anisotropic microstructures, and the fast generation of highly detailed designs.

The implementations are a multiscale approach and follows these two consecutive steps:
The first step consists in solving a low-resolution (i.e., coarse scale) topology optimization on the considered design problem. This may be executed as known in the art and provides two key components: information about the material distribution in the form of a density field, and information about the material directions in the form of an orientation field. The implementations may comprise providing the orientation field by calculation of the local stress tensor at each point in space. Alternatively, the implementations may comprise providing the orientation tensor field by a different formulation of the topology optimization problem specifically made to produce optimized material orientations. In examples, the implementations may comprise providing the orientation field by optimizing an orientation field according to the method for designing a 3D modeled object disclosed in EP19306655.2 filed on 16 December 2019, which is incorporated herein by reference.
The second step consists in performing a high-resolution (i.e., fine scale) anisotropic reaction-diffusion for each principal direction of the orientation field and then combining the resulting reaction diffusion patterns into a single complete structure.

The implementations produce structures with improved regularity near orientation singularities or divergence. This is advantageous compared to other projection or dehomogenization methods of the art which require complex and often unreliable reorientation or matching schemes. This difference is due to the natural tendency of reaction-diffusion patterns to spontaneously settle into highly regular, low energy, relaxed geometrical structures. Moreover, the inherently local growth-based properties of reaction-diffusion allow using the implementations as a kind of "auto-completion" of the structure. This enables fast editing of the structure, for example by allowing the designer to interactively erase unsatisfying regions, or draw guiding shapes acting as constraints.

### Topology optimization

The purpose of the preliminary structural optimization (i.e., the first step discussed above) on a low-resolution grid is to find the overall shape which will be used as a boundary for microstructure material infill. The preliminary structural optimization may comprise classical compliance topology optimization problem subject to a global volume constraint which relies on the density-based method colloquially referred to as the Solid Isotropic Material with Penalization (SIMP) approach. The SIMP method starts with a partition of the design space into discrete areas or volumes in 2D or 3D, respectively. Generating a design in this partitioned design space is therefore reduced to finding a subset of elements that should be filled with the solid isotropic material while the other elements representing void. Furthermore, in order to facilitate the optimization process, the design variables are relaxed which means that instead of having a binary setting (i.e., solid/void), each element e in the design space **Ω** is given a continuous property 0 ≤ *p*(***x***) ≤ 1 called density.

Having the young modulus of the base material *E*₀ the young modulus of each element is written as a function of its density: $\begin{matrix}{ E \left(ρ\right) = {E}_{min} + {ρ}^{p} \left({E}_{0}-{E}_{min}\right) \\ 0 < {E}_{min} ≪ {E}_{0}\end{matrix}$

As large regions of intermediate density values (i.e., density different from 0 or 1) have no straightforward physical interpretation, the SIMP interpolation scheme introduces a penalization factor *p* > 1, applied as an exponent on the density value. The penalization factor has a value in the interval ]1, 6[ and often chosen around p=3, to discourage the optimization algorithm from keeping them from a stiffness point of view.

Finding the best material distribution across the design space consists in minimizing the compliance measured by the total strain energy and expressed as follows: $J \left(ρ\right) = {f}^{T} u$ where ***f*** and ***u*** are the nodal force and nodal displacement vectors, respectively.

Assuming a linear structural model, the vectors ***f*** and ***u*** are connected by the global stiffness matrix **K** from the state equation: $K = fu$

The compliance optimization problem described here admits a trivial solution where every element density is set to its maximum allowable value (i.e., *p*(***x***) = 1, **∀*x*** ∈ **Ω**) regardless of the loads and boundary conditions if no additional constraint is applied. Thus, an inequality constraint is added to lead to the complete formulation of the optimization problem: $\begin{matrix}argmin J \left(ρ\right) = {f}^{T} u \\ s . t . { \begin{matrix}K \left(ρ\right) u = f \\ 0 < ρ \left(x\right) < 1 , ∀ x ∈ Ω \\ {G}_{tot} \left(ρ\right) = \frac{1}{{G}_{tot}^{∗} {v}_{Ω}} {\sum }_{x ∈ Ω} \left(ρ\left(x\right){v}_{x}\right) - 1 \leq 0\end{matrix}\end{matrix}$ with *νₓ* the volume of an element ***x**, ν*_{Ω} the global volume and ${G}_{tot}^{∗}$ the total allowable volume fraction.

For ensuring a well-posed optimization problem, the implementations may apply a control on the length-scale of the density field. This may be achieved through the use of filters. For example, the implementations may use a sensitivity filter by functions like a convolution operation on the gradients where the new filtered sensitivities are a weighted average of the sensitivities in a fixed neighborhood around each element. Without any filter, the gradient of the objective function *J* with respect to each optimization variable *ρₓ* for *x* ∈ ***Ω*** may be written: $\frac{\partial J}{\partial {ρ}_{x}} = - {pρ}_{x}^{p - 1} \left({E}_{0}-{E}_{min}\right) {u}_{x}^{T} {K}_{x}^{0} {u}_{x} ,$ where ***uₓ*** and ***Kₓ*** are the displacement vector and stiffness matrix specifically for the finite element ***x**,* in other words they are a subset of ***u*** and ***K*,** i.e., the (nodal) displacement vector and stiffness matrix for the entire mesh as defined above. Further, ${K}_{x}^{0}$ denotes a "baseline" stiffness matrix for solid material for the finite element ***x*** as all elements are made of the same constitutive material, they end up having the same stiffness matrix.

In examples, a filtered gradient $\left(\frac{{\partial J}^{˜}}{\partial {ρ}_{x}}\right)$ may be of the form: $\frac{{\partial J}^{˜}}{\partial {ρ}_{x}} = \frac{{\sum }_{y ∈ ω} {ρ}_{y} {v}_{y} {w}_{x , y} \frac{\partial J}{\partial {ρ}_{y}}}{{ρ}_{x} {\sum }_{y ∈ ω} {v}_{y} {w}_{x , y}}$

where ***ω*** is the set of elements in the neighborhood of ***x**, w_{x,y}* is the weight for the mask of element ***x*** applied to element ***y*** and *ν_{y}* is the volume of element ***y***. Given a filter radius *rₘᵢₙ* and the partial position of an element *rₓ,* the mask is the linearly decaying function: ${w}_{x , y} = {r}_{min} - ‖ {r}_{x} - {r}_{y} ‖ .$

In reference to FIG. 2, the preliminary structural optimization may comprise the steps 210-214 by computing the finite element model and apply boundary conditions (step 210), initializing the design variables (step 211), evaluating the objective function (of the topology optimization) (step 212), evaluating the gradient of the objective function with respect to design variables (step 213), and updating the design variables using mathematical programming (step 214). The implementations may repeat iteratively the steps 212 to 214 in a loop until a convergence achieved. The method may output the final stress tensor after convergence in step 215.

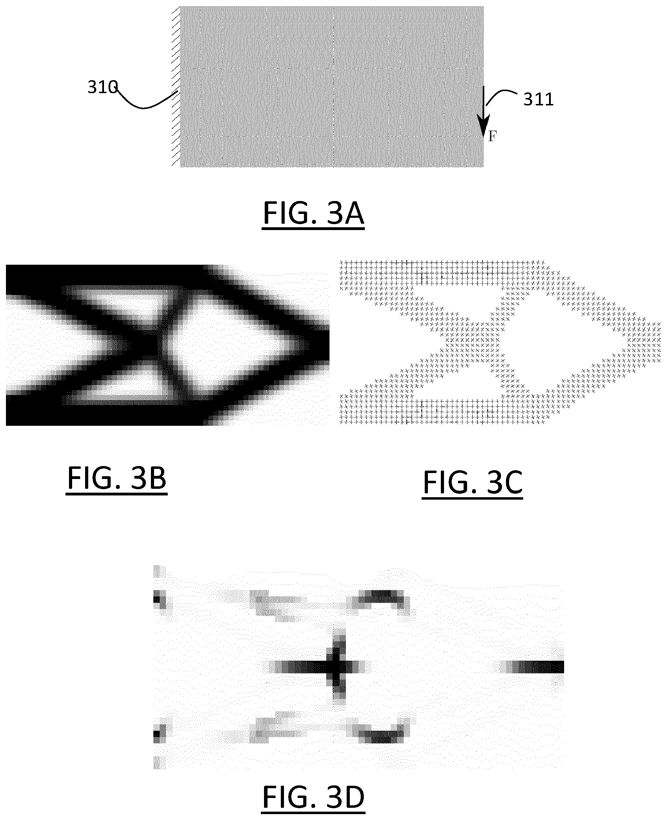

An example of implementations for topology optimization is presented in FIG. 3. The optimization scenario with boundary conditions 310 and loads 311 depicted in FIG. 3A which referred to as the cantilever problem, a standard test case in the literature. A numerical optimization on a low-resolution grid is presented in FIG. 3B.

### Stress field

Once the optimization done, and in reference to step 216 of FIG. 2, the implementation may compute the stress tensor for each square/cubic element using the nodal force values of its vertices. The resulting matrix ***σ***(**x**) is symmetric real and can be diagonalized in an orthogonal basis. In other words, the implementations may compute the eigenvectors and eigenvalues of the matrix ***σ***(***x***). These eigenvectors can be sorted in order to build two or three coherent orientation fields. The first eigenvector field is given by the eigenvectors with the biggest absolute eigenvalues. In 2D, the second vector field is directly deducted by being orthogonal to the first eigenvector. In 3D, the implementations store the two last eigenvectors such that they described two vector fields with maximal alignment between vectors inside each field. In examples where the second and the third eigenvectors are negligible in respective eigenvalues because of the relative low value of stress, the implementations generate these directions artificially from the cross product of the first direction with a constant vector. The constant vector may be one of the standard bases for a Cartesian coordinate system (i.e., ***eₓ,e_{y},*** or ***e_{z}***). This helps to create a coherent tensor field still relevant to the principal direction. An example of the computed stress tensor is presented in FIG. 3C.

As most meshing issues along orientation fields appear where there are singularities, the implementations may infill these areas with complete solid material. Hence the implementations may compute a "solid material map" (step 217 of FIG. 2) to indicate where these problematic regions (or areas) take place. The method may fill completely such problematic regions. In examples, the implementations compute, for each element, the mean scalar product (in absolute value) with its neighbors to assess locally its alignment relatively to its surrounding vectors: $a \left(e\right) = \frac{1}{{N}_{x}} {\sum }_{y ∈ N \left(x\right)} \left|v\left(x\right)⋅v\left(y\right)\right|$ with *N*(***x***) and *Nₓ* respectively the set and number of neighbors of the element ***x**.* Then the implementations define the solid material map as: $Γ \left(x\right) = \frac{1}{Z} min \left(β\left(1-a\left(x\right)\right),1\right) ρ \left(x\right)$ where β increases the size of solid regions and Z is a renormalization factor. An example of such a map for the cantilever 2D problem if illustrated in FIG. 3D. In examples, the solid material map may alternatively or additionally be completed (i.e., set) by a user (e.g., the designer) to infill other specific areas. In examples where the map is partially set by a user, the final map may be obtained as: $Γ \left(x\right) = \left({Γ}_{designer}∪{Γ}_{σ}\right) = max \left({Γ}_{designer}\left(x\right),{Γ}_{σ}\left(x\right)\right)$ where Γ*_{designer}* is a part of the map set by the user while Γ*_{σ}* may be a solid material map obtained as ${Γ}_{σ} = \frac{1}{Z} min \left(β\left(1-a\left(x\right)\right),1\right) ρ \left(x\right) .$

### Anisotropic Gray-Scott reaction diffusion

The concept of Turing patterns describes how natural patterns such as stripes, spots, spirals, fronts, targets, hexagons may arise naturally out of a homogeneous and uniform state. The theory of Turing pattern explains pattern formation through a reaction-diffusion mechanism. Reaction-diffusion systems are commonly used to study the change in space and time of the concentration of one or more chemical substances (also called morphogens when relevant to the field of biology). Two processes are responsible for the concentration variations: local chemical reactions in which substances are transformed into each other and diffusion which causes the substance to spread out over a surface in space.

In its most general form, a reaction-diffusion (RD) system can be described by this partial differential equation (PDE): $\frac{\partial C}{\partial t} = ∇ ⋅ \left({D}_{_}⋅∇C\right) + R \left(C\right)$ where ***C*** is the vector of morphogens concentrations, ***D*** is the diffusion tensor of the species and ***R*** accounts for all local reactions.

The implementations may particularly employ a two-component RD model, the Gray-Scott model, where only one specie diffuses anisotropic ally. The corresponding PDE can be written as: $\begin{matrix}{ \frac{\partial u}{\partial t} = \left(σ\left(x\right)∇\right) ⋅ ∇ u + γ \left(-{uv}^{2}+F\left(1-u\right)\right) \\ \frac{\partial v}{\partial t} = d {∇}^{2} v + γ \left({uv}^{2}-\left(k+F\right)v\right)\end{matrix}$ where ***d*** < **1** is the diffusion rate between the two species, ***σ*** the anisotropic diffusion matrix (such that Tr(***σ***) = **1** where Tr is the trace), *γ* controls the pattern length scale, F the feed rate of specie *u* and *k* the kill rate of specie *ν*.

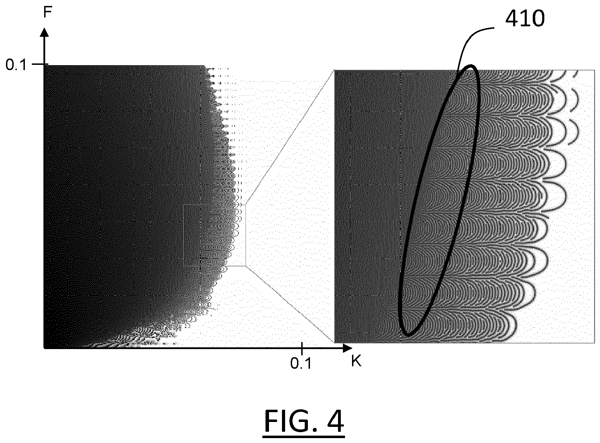

The implementations set the values of F and *k* using a map as illustrated in FIG. 4 where RD is computed for values of (*F, k*) ∈ [0,1]². The implementations set the valued of F and k to values in zone 410 which results in an oriented and sufficiently connected patterns. In examples, the implementations may set F = 0.0395 and *k* = 0.059 which are convenient.

The RD system is able to produce oriented patterns depending on the local favoring directions given by ***σ***. In order to completely control the pattern for structure design, the implementations restrict the pattern growth inside a design area **Ω*_{d}*:** $\begin{matrix}{ \frac{\partial u}{\partial t} = \left(σ\left(x\right)∇\right) ⋅ ∇ u + γ \left(-{uv}^{2}+F\left(1-u\right)\right) \\ \frac{\partial v}{\partial t} = d {∇}^{2} v + γ \left({uv}^{2}-\left(k+F\right)v\right) {I}_{{Ω}_{d}} \left(x\right) - λ \left(1-{I}_{{Ω}_{d}}\left(x\right)\right) v\end{matrix}$ Where ${I}_{{Ω}_{d}} \left(x\right)$ takes the value **1** if *x* ∈ **Ω*_{d}*** and **0** otherwise. ***λ*** > **0** and ***λ*** » ***F**, **k*** such that the specie ***ν*** is exponentially "killed" (i.e., disappeared) outside the area of interest (e.g., **Ω*_{d}***), In examples, **Ω*_{d}*** is defined by a thresholding on the density field given by topology optimization.

The implementations may set the initial conditions of RD as *u*(***x**, t* = 0) = 1 everywhere and ***v***(***x**, t* = 0) = 0 except *ν*(***x*** ∈ ***ω***), *t* = 0) = 1 with ***ω*** a region of **Ω*_{d}***. Further, the implementations may set the boundary conditions of RD on boundary of a domain **Ω**. The domain **Ω** may be a cuboid and **Ω*_{d}*** ⊂ **Ω**. The boundary conditions may be cyclic, symmetric, and/or reflective. The choice of boundary conditions does not have significant impact on the RD solution as the concentrations of species are killed outside **Ω*_{d}***.

The implementations may also infill (e.g., completely) some specific areas given by a solid material map Γ(***x***). The parameter *k* then takes this map into account to discourage the reaction to "kill" the specie *ν* at these locations: $k \left(x\right) = k \left(1-αΓ\left(x\right)\right)$

The parameter *α* ∈ [0,1] (typically *α* = 0.5) adjusts how much these regions should be infilled.

### Structure compilation

The stress tensor computed above is diagonalizable in an orthogonal basis and can be written at each element: $σ = R Λ {R}^{T}$ where R is the rotation matrix computed from the eigenvectors sorted as discussed above (i.e., from the first eigenvector to the second (in 2D) and the third (in 3D) eigenvectors) and **Λ** is the diagonal matrix of the corresponding eigenvalues.

The implementation may build diffusion tensors upon the stress tensor for each principal stress direction i by defining ζ > 1 as the custom anisotropy and ${σ}_{i} = \frac{1}{Tr \left({D}_{i}\right)} R {D}_{i} {R}^{T}$ where **Dᵢ** is a diagonal matrix filled with 1 on the diagonal and ζ at the (i, i) position. The value of ζ may be a value in the interval ]1,10], preferably 5. In reference to FIG. 2, the implementations may compute (i.e., build) the diffusion tensors in step 218.

The implementations may upsample the density field given by the topology optimization to obtain a smooth upsampled density field. The implementations may then threshold the smooth upsampled density field for the design area **Ω*_{d}***, the associated upsampled stress tensor field for ***σ***(***x***) (without smoothing) and a smooth upsampled solid material map for Γ(***x***). By gathering all together the implementations may generate oriented structures infilled with patterns perpendicular to each principal stress directions (stripes in 2D and foils in 3D) at a fine scale. Each structure (***Sᵢ***) is represented by a normalized density field obtained by the finite differences integration of each following system: $\left({S}_{i}\right) { \begin{matrix}\frac{\partial {u}_{i}}{\partial t} = & \left({σ}_{i}\left(x\right)∇\right) ⋅ ∇ {u}_{i} + γ \left(-{u}_{i}{v}_{i}^{2}+F\left(1-{u}_{i}\right)\right) \\ \frac{\partial v}{\partial t} = & d {∇}^{2} {v}_{i} + γ \left({u}_{i}{v}_{i}^{2}-\left(k\left(1-αΓ\left(x\right)\right)+F\right){v}_{i}\right) {I}_{{Ω}_{d}} \left(x\right) - λ \left(1-{I}_{{Ω}_{d}}\left(x\right)\right) {v}_{i}\end{matrix}$

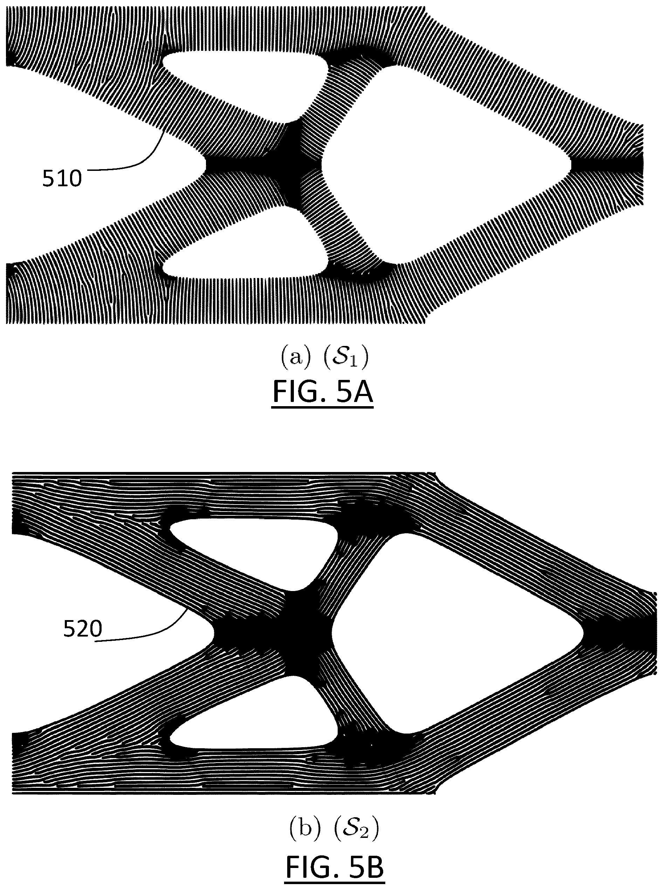

A structure ***Sᵢ*** is then described by an isosurface extraction of the density field generated by *ũ* = (1 ― *uᵢ*). In reference to FIG. 2, the implementation may compute the patterns at step 219, thereby obtaining the structures 220, 221, and 222 (for a 3D example). Examples of such (stress-oriented) structures for the cantilever 2D problem are illustrated in FIG. 5, wherein each of FIG. 5A and 5B illustrate one of the patterns ***S*₁** and ***S*₂** (i.e., pattern 510 in FIG. 5A and pattern 520 in FIG. 5B) computed for one principal direction.

Eventually the implementations may compiles the final structure by a Boolean operation (step 223 of FIG. 2) depending on the dimension. In 2D: ${S}_{2 D} = {S}_{1} ∪ {S}_{2} = max \left({{u}^{˜}}_{1}, {{u}^{˜}}_{2}\right)$ and in 3D ${S}_{3 D} = {U}_{i \neq j} {S}_{i} ∩ {S}_{j} = {max}_{i \neq j} \left({min}_{i \neq j}\left({{u}^{˜}}_{i}, {{u}^{˜}}_{j}\right)\right) .$

In order to enhance the structural performance of the resulting structure, the implementations may enlarge the (thickness of) beams oriented along the first principal direction or reduce the (thickness of) beams not oriented along the first principal direction by doing iso-surface shifts of ***ũᵢ*** before performing the Boolean operations as ${{u}^{˜}}_{inew} = normalize \left(max\left(min\left({{u}^{˜}}_{i},{s}_{i}+{s}_{m}\right),{s}_{i}-{s}_{m}\right)\right)$ with *s*₁ > *s*₂ = *s*₃. The implementations may set *s*₁ = 0.8, *s*₂ = *s*₃ = 0.65, *sₘ* = 0.15. The implementation may perform such an iso-surface shift in step 222 of FIG. 2. The implementations may output the final structure to the user, for example in a CAD file or by displaying the final structure on a GUI in step 224 of FIG. 2.

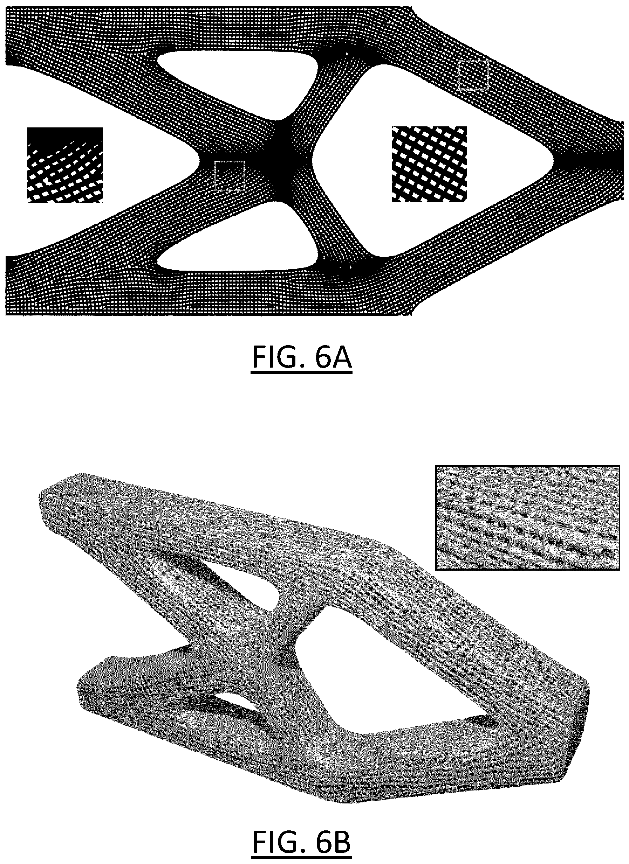

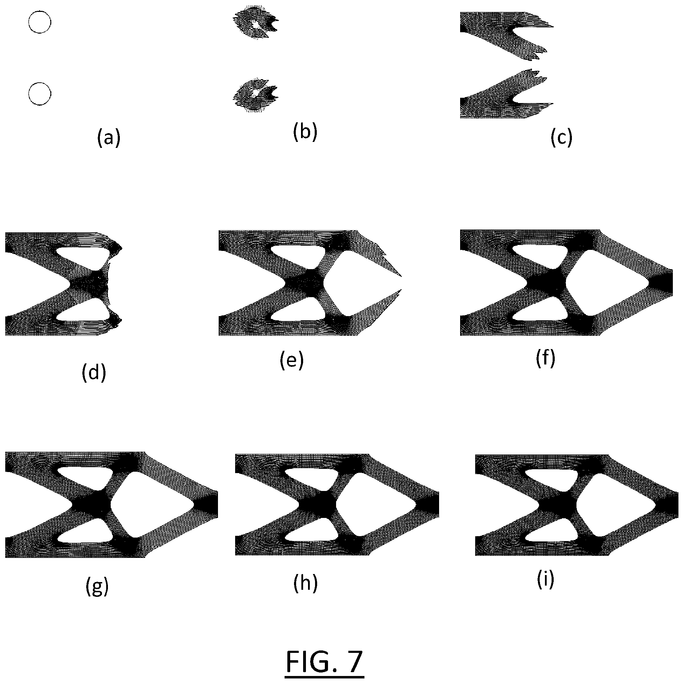

Examples of final structure in 2D and 3D for the cantilever problem are given FIG. 6A and FIG. 6B, respectively. A time evolution for the 2D cantilever problem is presented in FIGs. 7(a) to (i) in which the time (i.e., a respective time of the RD equations) evolves from FIG. 7(a) to FIG. 7(i).

## Claims

1. A computer-implemented method for designing a modeled object representing a mechanical part formed in a material having an anisotropic behavior with respect to a physical property, the method comprising:
- providing:
o a first mesh;
o a density field representing at least boundary of the modeled object; and
o an orientation tensor field representing a desired anisotropic behavior;
- for each i^{th} principal direction of the orientation tensor field, computing an anisotropic reaction-diffusion pattern (***Sᵢ***) on an i^{th} mesh, the i^{th} mesh having higher resolution than the first mesh and being bounded by the boundary of the modeled object; and
- combining by Boolean operations the computed anisotropic reaction-diffusion patterns projected on a second mesh.

2. The method of claim 1, wherein the computing an anisotropic reaction-diffusion pattern (***Sᵢ***) on an i^{th} mesh comprises:
- computing an anisotropic diffusion tensor (**σᵢ**) based on the orientation tensor field; and
- computing an anisotropic reaction-diffusion pattern (***S*ᵢ**) on the i^{th} mesh based on a system of reaction-diffusion, the system of reaction-diffusion comprising a diffusion dependent on the computed anisotropic diffusion tensor.

3. The method of claim 2, wherein the computing an anisotropic reaction-diffusion pattern (*S*ᵢ) on the i^{th} mesh based on a system of reaction-diffusion comprises:
- computing a solution of the system of reaction-diffusion on the i^{th} mesh, the solution being a distribution of values on the i^{th} mesh which satisfies the system of reaction-diffusion; and
- computing the pattern by computing iso-surfaces of the computed solution for an iso-surface value.

4. The method of any of claims 2 to 3, further comprising:
- providing a solid material map (Γ) representing, for each element of the i^{th} mesh, an alignment of orientation of the orientation tensor field at the element to orientation of the orientation tensor field at neighboring elements; and
wherein computing an anisotropic reaction-diffusion pattern (***S*ᵢ**) on the i^{th} mesh based on a system of reaction-diffusion comprises:
- computing an anisotropic reaction-diffusion pattern (***S*ᵢ**) on the i^{th} mesh based on a system of reaction-diffusion, the system of reaction-diffusion comprising a diffusion dependent on the computed anisotropic diffusion tensor and a reaction dependent on the provided solid material map (Γ).

5. The method of any of claims 2 to 4, wherein the system of reaction-diffusion is a Gray-Scott model of the form, for principal direction i: $\begin{matrix}\frac{{ \partial {u}_{i}}{\partial t} = & \left({σ}_{i}\left(x\right)∇\right) ⋅ ∇ {u}_{i} + γ \left(-{u}_{i}{{v}_{i}}^{2}+F\left(1-{u}_{i}\right)\right) \\ \frac{\partial {v}_{i}}{\partial t} = & d {∇}^{2} {v}_{i} + γ \left({u}_{i}{{v}_{i}}^{2}-\left(k+F\right){v}_{i}\right) {I}_{{Ω}_{d}} \left(x\right) - λ \left(1-{I}_{{Ω}_{d}}\left(x\right)\right) {v}_{i}\end{matrix}$ where **σᵢ** is the anisotropic diffusion tensor, d is an isotropic diffusion parameter, V is a gradient operator, ∇² is a Laplace operator, **Ω_{d}** represents a region bounded by the boundary of the modeled object, ${I}_{{Ω}_{d}} \left(x\right)$ takes the value 1 if **x** ∈ **Ω_{d}** and 0 otherwise, λ, F and k are reaction parameters.

6. The method of any of claims 1 to 5, wherein the computing an anisotropic reaction-diffusion pattern (***S*ᵢ**) on an i^{th} mesh further comprises upsampling of the orientation tensor field and the density field on the i^{th} mesh.

7. The method of any of claims 1 to 6, wherein the modeled object is a 3D modeled object, and wherein the combining by Boolean operations comprises computing a disjunction of a set of conjunctions of a first pattern (***S*ᵢ**) on an i^{th} mesh and a second pattern (***S*ⱼ**) on an j^{th} mesh, with i≠j.

8. The method of any of claims 1 to 6, wherein the modeled object is a 2D modeled object, and wherein the combining by Boolean operations comprises computing a disjunction of a first pattern (***S*ᵢ**) on an i^{th} mesh and a second pattern and a second pattern (***S*ⱼ**) on a j^{th} mesh with i≠j.

9. The method of any of claims 1 to 8, wherein the first mesh is a finite element mesh and wherein the providing the density field comprises:
o providing data associated to the first mesh, the data comprising:
∘ one or more forces forming one or more respective load cases;
∘ one or more boundary conditions;
∘ one or more parameters related to the material; and
o a global quantity constraint relative to a global quantity of the material in the finite element mesh.

10. The method of claim 9, wherein the providing the density field further comprises:
- performing a topology optimization based on the first mesh and based on the data associated to the first mesh therefore obtaining the density field, the density field further representing distribution of material quantity of the 3D modeled object.

11. The method of any of claims 9 to 10, wherein the providing the orientation tensor field comprises, for each location of the orientation tensor field:
- computing a local stress tensor based on the density field and the data associated to the first mesh; and
- computing the orientation tensor field at the location based on the local stress tensor field.

12. The method of claim 11, wherein the computing of the orientation tensor field comprises:
- computing a first orientation based on a principal eigenvector of the local stress tensor;
- computing one or more other orientations based on the principal eigenvector and the local stress tensor; and
- computing the orientation tensor field based on the first orientation and the one or more other orientations.

13. A computer program comprising instructions for performing the method according to any one of claims 1 to 12.

14. A computer readable storage medium having recorded thereon the computer program of claim 13.

15. A system comprising a processor coupled to a memory, the memory having recorded thereon the computer program of claim 13.
